# EUROPÄISCHE PATENTSCHRIFT

(11) **EP 1 884 639 B1**
(45) Veröffentlichungstag und Bekanntmachung des Hinweises auf die Patenterteilung: **07.10.2015**
(21) Anmeldenummer: 07113121.3
(22) Anmeldetag: 25.07.2007
(51) Int. Cl.: F02C 7/05, F02K 3/06, F04D 29/52, F01D 21/00

(54) **Eisschlagschutzring für das Fangehäuse einer Fluggasturbine**
Ice strike sheathing ring for the fan casing of an aircraft engine
Anneau de protection contre les impacts de glace pour le carter de soufflante d'un moteur d'aéronef

(30) Priorität: 03.08.2006 DE 102006036648
(43) Veröffentlichungstag der Anmeldung: 06.02.2008
(73) Patentinhaber: Rolls-Royce Deutschland Ltd & Co KG, 15827 Dahlewitz (DE)
(72) Erfinder: Lenk, Olaf, 12527, Berlin (DE); Dickert, Uwe, 10318 Berlin (DE)

(56) Entgegenhaltungen:
- EP-A1- 0 623 734
- EP-A1- 0 795 682
- EP-A2- 0 927 815
- EP-A2- 0 952 310
- US-A- 5 336 044
- US-A- 5 622 472

## Beschreibung

Die Erfindung betrifft eine Fluggasturbine mit einem Eisschlagschutzring für das Fangehäuse der Fluggasturbine gemäß dem Oberbegriff des Patentanspruchs 1.

Luftfahrzeugantriebe werden unter anderem auch bei klimatischen Bedingungen eingesetzt, bei denen am Flugzeug Eisschichten gebildet werden, die sich später in Form von mehr oder weniger großen Eisstücken wieder lösen können. Darüber hinaus müssen Flugzeuge auch durch Bereiche mit Hagelbildung fliegen. Die Hagelkörner oder Eisstücke gelangen in das Triebwerk und werden durch die Drehbewegung der Fanschaufeln radial nach außen beschleunigt und an die Innenfläche des Fangehäuses geschleudert. Wenn die abgelösten Eispartikel oder die Hagelkörner eine bestimmte Größe überschreiten, kann das Fangehäuse beschädigt werden. Um durch Eisschlag bedingte Schäden am Triebwerk zu vermeiden, ist in dem gefährdeten Bereich des Fangehäuses eine Eisschlag-Schutzschicht, das heißt, ein aus mehreren am Innenumfang des Fangehäuses aneinander gereihten Segmenten gebildeter Schutzring, angebracht. Zur Begrenzung der Montagekosten ist der Schutzring aus einer möglichst geringen Zahl von Einzelsegmenten, vorzugsweise sechs einzeln montierten 60°-Segmenten, gebildet. Die Segmente bestehen aus mehreren, miteinander verbundenen, jeweils durchgehenden Lagen aus Faserverbundmaterial, die einen Hohlraum oder einen Schaumkern umschließen. Bekannt sind weiterhin aus Segmenten zusammengesetzte Eisschlagschutzschichten mit offenem, aus Honigwaben gebildetem Querschnitt, bei denen die zum Luftstrom weisende Oberfläche mit einer Faserverbundschicht abgedeckt ist.

Bei extremen oder ungünstigen Wetterbedingungen können die in das Triebwerk gelangenden Eisstücke so groß sein, dass die Oberfläche des Eisschlagschutzrings zerstört wird und dessen oberer Teil von der übrigen Struktur abgetrennt wird. Die abgetrennten Teile werden mit dem Triebwerksluftstrom mitgerissen und verfangen sich in den Austrittsleitschaufeln des Fan. Das kann zu einer teilweisen Blockierung der Triebwerksströmung und in deren Folge zum Verlust des Triebwerksschubes führen.

Die EP 0 623 734 beschreibt einen Faserverbundartikel mit einer Vielzahl Lamellen, wobei jede Lamelle mit einer Matrix verbundene Strukturfasern und einen adhäsiven Film umfasst, der zwischen den Lamellen liegt und diese verbindet.

Die EP 0 927 815 beschreibt ein Fanauffanggehäuse einer Gasturbine, welches eine schaufelspitzentragende Schicht darin umfasst.

Die US 5,336,044 beschreibt ein die Fanschaufeln umgebendes ringförmiges Gehäuse, das eine Vielzahl von Patten umfasst, die nach innen eine schallabsorbierende Struktur und nach aüßen eine eindämmende Struktur aufweisen.

Der Erfindung liegt die Aufgabe zugrunde, einen aus wenigen Einzelsegmenten bestehenden Eisschlagschutzring so auszubilden, dass die Flugsicherheit auch bei extremer Witterung und Ausbildung großer Eisstücke oder Hagelkörner gewährleistet ist.

Erfindungsgemäß wird die Aufgabe mit einem gemäß den Merkmalen des Patentanspruchs 1 ausgebildeten Eisschlagschutzring gelöst. Vorteilhafte Weiterbildungen der Erfindung sind Gegenstand der Unteransprüche.

Der Grundgedanke der Erfindung besteht in der Ausbildung der einzelnen Segmente des Eisschlagschutzringes mit in regelmäßigem Abstand angeordneten Sollbruchstellen, so dass bei extremer Eisschlagbelastung lediglich Teile von begrenzter Größe von dem Eisschlagschutzring abgetrennt werden und die zwischen den Austrittsleitschaufeln verbleibenden Öffnungen passieren können und somit die Triebwerksströmung nicht blockiert und der Triebwerksschub nicht vermindert wird.

Die an das Fangehäuse angrenzende Außenwand der aus mehreren Faserverbundlagen bestehenden Segmente ist fest mit dem Fangehäuse verbunden, während die Sollbruchstellen lediglich in der zur Luftströmung weisenden Innenwand ausgebildet sind.

Die Sollbruchstellen werden durch Schlitze in den Faserverbundlagen der Innenwand und durch in der Innenwand vorgesehene Montagebohrungen, die zur Befestigung der Segmente am Fangehäuse mittels einer Sicherheitsverschraubung dienen, gebildet. Die außen liegende Faserverbundlage ist nicht unterbrochen und die Montagebohrungen sind nach der Montage des Eisschlagschutzringes verschlossen.

Die Anzahl der durch Schlitze unterbrochenen Faserverbundlagen kann variieren und definiert die Größe der Materialschwächung im Bereich der Sollbruchstellen. Die Schlitze in den einzelnen Faserverbundlagen können Übereinander oder versetzt zueinander angeordnet sein.

In Ausgestaltung der Erfindung bestehen die Eisschlagschutzringe aus sechs 60°-Segmenten mit einem 10°-Abstand der Sollbruchstellen, wobei die beiden äußeren Sollbruchstellen durch die Montagebohrungen und die drei dazwischen liegenden Sollbruchstellen durch die Schlitze (Unterbrechungen) in dem Faserverbundmaterial gebildet sind.

Die Befestigung der Segmente des Eisschlagschutzringes am Fangehäuse erfolgt durch Verkleben sowie eine über die gleichzeitig als Sollbruchstelle fungierenden Montagebohrungen montierte Sicherbeitsverschraubung. Die Sicherheitsverschraubung umfasst eine in einer Bohrung des Fangehäuses fixierte und auf dem Segment abgestützte Sicherheitshülse mit elastischer Bettung, die das Segment mittels Sicherungsschraube, Sicherungsadapter und Sicherungsmutter am Fangehäuse verspannt. Die Montagebohrung ist durch eine bündig an der Innenfläche des Segments abschließende Abdeckplatte verschlossen.

Ein Ausführungsbeispiel der Erfindung wird anhand der Zeichnung näher erläutert. Es zeigen:
- Fig. 1: eine Teilansicht eines Fangehäuses mit Eisschlagschutzring im Schnitt:

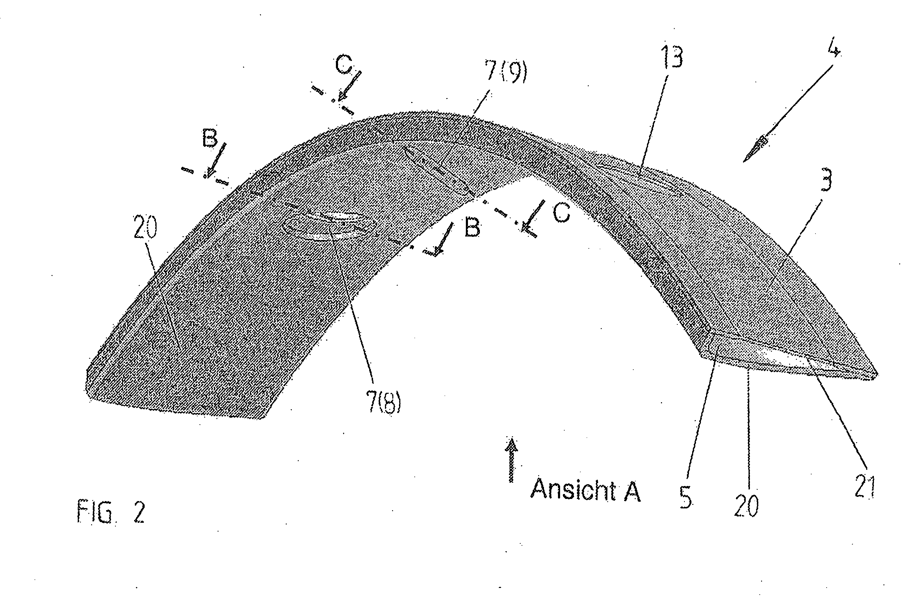

- Fig. 2: eine perspektivische Ansicht eines Eisschlagschutzring-Segments;
- Fig. 3: eine Ansicht A des Eisschlagschutzring-segments nach Fig. 2;

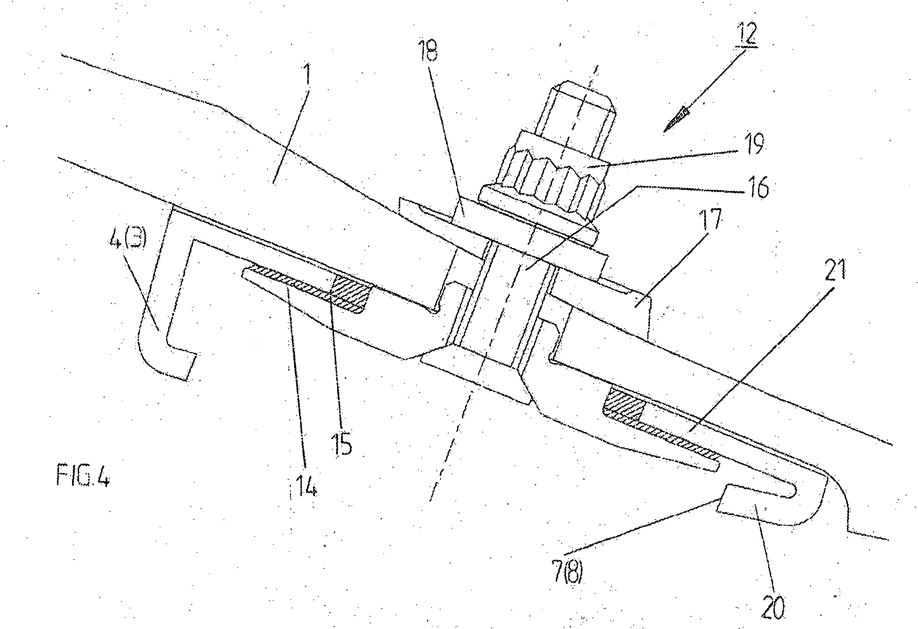

- Fig. 4: einen Schnitt BB nach Fig. 1 mit einer Sicherungsverschraubung des Eisschlagschutzring-Segments am Gehäuse; und
- Fig. 5: einen Schnitt CC nach Fig. 1 mit einer im Eisschlagschutzring ausgebildeten Sollbruchstelle.

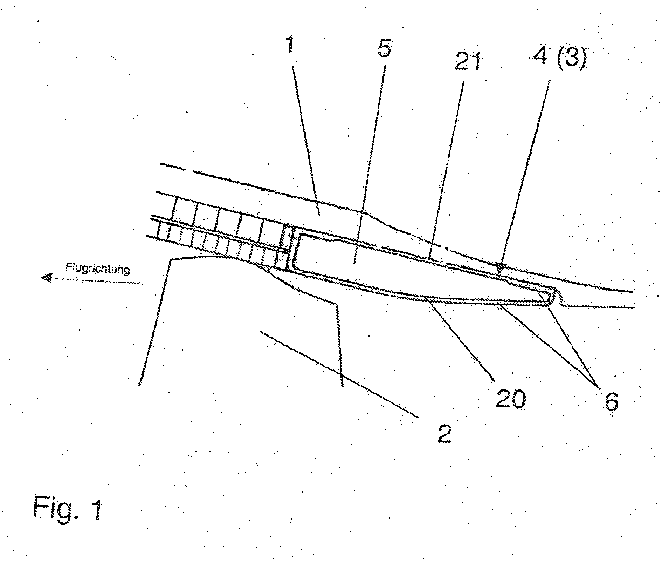

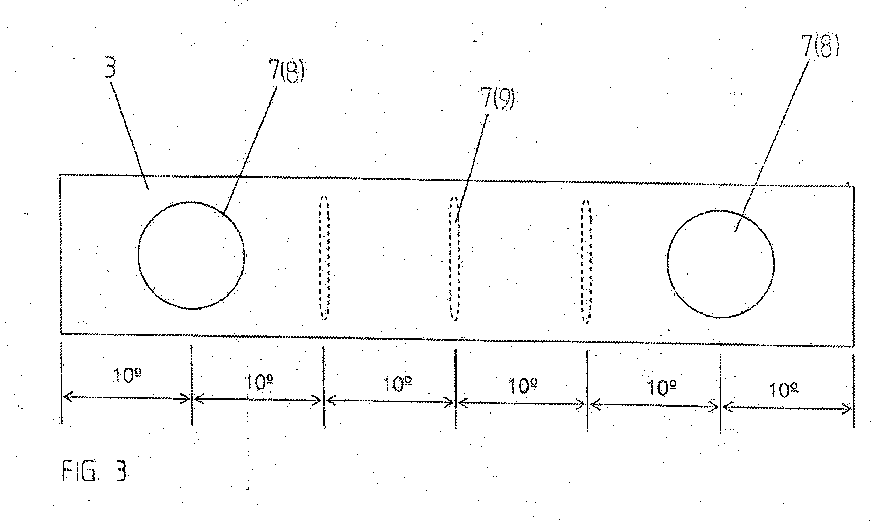

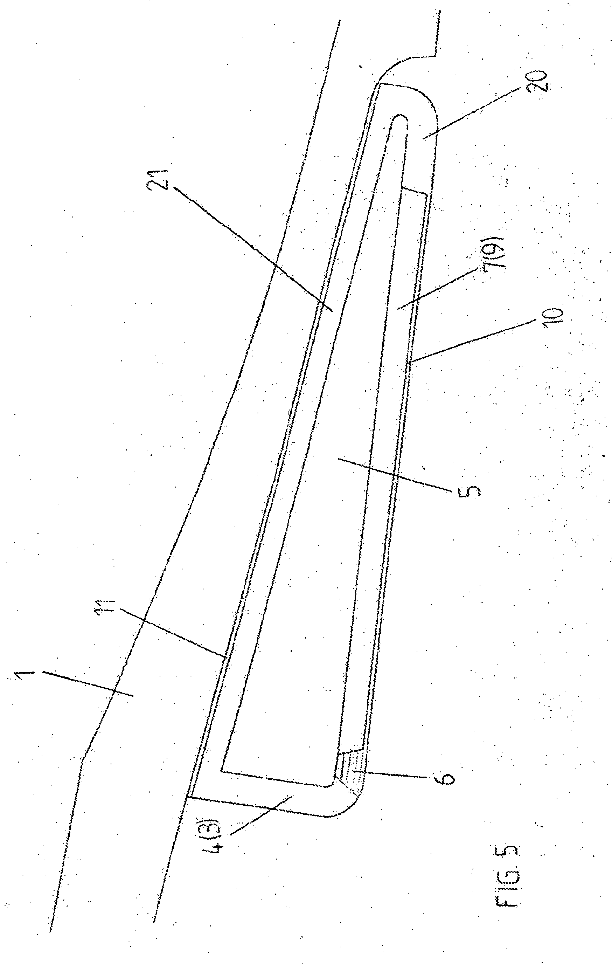

Gemäß der in Fig. 1 wiedergegebenen teilweisen Darstellung im Bereich eines Fangehäuses 1 ist in einem dem Fan 2 nachgeordneten Teil des Fangehäuses 1 ein aus sechs 60°-segmenten bestehender Eisschlagschutzring 4 befestigt. Jedes Segment 3 des Eisschlagschutzrings 4 besteht aus mehreren - einen Hohlraum 5 oder einen Schaumkern umschließenden - Faserverbundlagen 6, die, wie Fig. 3 zeigt, zur Ausbildung von Sollbruchstellen 7 an der dem Eisschlag ausgesetzten Innenseite in einer 10°-Teilung unterbrochen sind. Die Sollbruchstellen 7 umfassen in der vorliegenden Ausführungsform zum einen im 10°-Abstand von den Enden des Segments 3 vorgesehene Montagebohrungen 8, die zum Anbringen einer Sicherheitsverschraubung 12 mit dem Fangehäuse 1 dienen, und im 10°-Abstand zwischen den Montagebohrungen 8 ausgebildete axiale Schlitze 9. Die Unterbrechung der Faserverbundlagen 6 zur Ausbildung der Schlitze 9 erfolgt jedoch nicht in der von dem Luftstrom kontaktierten äußeren Faserverbundlage 10 der Innenwand 20 des Segments 3. Die einzelnen Faserverbundlagen können an ein- und derselben Stelle durch einen axialen Schlitz unterbrochen sein, um, wie Fig. 5 zeigt, eine durchgehende Sollbruchstelle 7 zu bilden, oder die Unterbrechungen (Einzelschlitze) in den einzelnen Lagen können versetzt zueinander angeordnet sein oder auch nur in einem Teil der Faserverbundlagen vorgesehen sein. Die Anordnung und Größe der Unterbrechungen sowie die Anzahl der unterbrochenen Faserbundlagen definiert den Betrag der Materialschwächung an der Sollbruchstelle 7. Die Segmente 3 sind an der Außenwand 21 mittels eines Klebefilms 11 mit der Innenfläche des Fangehäuses 1 verbunden und zusätzlich durch Sicherheitsverschraubungen 12 gesichert. Zur Befestigung der Segmente 3 mittels der Sicherheitsverschraubung 12 sind die an deren Innenseite 20 ausgebildeten Montagebohrungen 8 und in der gleichen Achse liegende kleinere Bohrungen 13 in der Außenwand 21 der Segmente 3 vorgesehen. Die Sicherungsverschraubung 12 umfasst eine in dem Hohlraum 5 angeordnete, in einer Bohrung des Fangehäuses 1 fixierte Sicherungsbuchse 14 mit breitem Kopf und elastischer Bettung 15 an dem Faserverbundmaterial, die mittels einer Sicherungsschraube 16 sowie einem Adapter 17, einer Unterlegscheibe 18 und einer Sicherungsmutter 19 an der Außenseite des Fangehäuses 1 verspannt ist, Die an der Innenseite 20 des Segments 3 verbleibenden Hohlräume im Bereich der Montagebohrungen 8 werden - beispielsweise mit einem Polysulfid - gefüllt und mit einer Abdeckscheibe (nicht dargestellt) bündig mit der Faserverbundlage 10 abgedeckt.

Bei dem Eisschlagschutzring gemäß der zuvor beschriebenen Ausführungsform kann die Luft somit ohne Störung entlang der geschlossenen inneren Faserverbundlage 10 (Innenwand 20 des Segments 3) strömen. Die einzelnen Segmente 3 sind mit ihrer an das Fangehäuse 1 grenzenden Außenwand 21 fest mit dem Fangehäuse 1 verbunden. Der Eisschlagschutzring 4 ist so dimensioniert, dass bei einem in üblicher Größenordnung auftretenden Eisschlag ein sicherer Schutz des Fangehäuses 1 gewährleistet ist. Wenn der Eisschlag im Ausnahmefall das Normalmaß überschreitet, wird die Innenwand 20 der Segmente 3 ausschließlich an den durch die Montagebohrungen 8 und die Schlitze 9 definierten Bruchkanten (Sollbruchstellen 7) zerstört, so dass Bruchstücke von begrenzter Größe entstehen, die zusammen mit der Triebwerksströmung den Zwischenraum zwischen den Austrittsleitschaufeln passieren können und so ein Blockieren der Triebwerksströmung und einen Verlust des Triebwerksschubes verhindern. Die an das Fangehäuse 1 grenzende Außenwand 21 der Segmente 3 des Eisschlagschutzringes 4 bleibt aufgrund der Verklebung und Sicherheitsverschraubung fest mit dem Fangehäuse verbunden. Die Erfindung ist nicht auf die zuvor beschriebene Ausführungsform beschränkt. In Abhängigkeit von der Ausführung und dem Betrieb des Triebwerks kann im Rahmen der erfindungsgemäßen prinzipiellen Anordnung von Sollbruchstellen die Dimensionierung und Ausbildung der Segmente und Sollbruchstellen verändert werden.

### Bezugszeichenliste

- 1: Fangehäuse
- 2: Fan
- 3: Segment
- 4: Eisschlagschutzring
- 5: Hohlraum
- 6: Faserverbundlage
- 7: Sollbruchstelle
- 8: Montagebohrung
- 9: Schlitze
- 10: äußere Faserverbundlage
- 11: Klebefilm
- 12: Sicherheitsverschraubung
- 13: Bohrung in 21
- 14: Sicherungsbuchse
- 15: elastische Bettung
- 16: Sicherungsschraube
- 17: Adapter
- 18: Unterlegscheibe
- 19: Sicherungsmutter
- 20: Innenwand v. 3
- 21: Außenwand v. 3

## Patentansprüche

1. Fluggasturbine, umfassend ein Fangehäuse (1), einen Fan (2) und dem Fan (2) nachgeschaltete Austrittsleitschaufeln, wobei das Fangehäuse einen Eisschlagschutzring (4) umfasst, der aus mehreren Faserverbundlagen (6) gebildete Segmente (3) mit einer der Triebwerksströmung und gegebenenfalls Eisschlag ausgesetzten Innenwand (20) und einer am Fangehäuse (1) befestigten Außenwand (21) umfasst,
**dadurch gekennzeichnet, dass**
in der Innenwand (20) in bestimmtem, regelmäßigem Abstand im Wesentlichen in Strömungsrichtung verlaufende Sollbruchstellen (7; 8, 9) ausgebildet sind und der Abstand so gewählt ist, dass bei extremem Eisschlag gebildete Bruchstücke der Innenwand (20) die Austrittsleitschaufeln passieren können.

2. Fluggasturbine nach Anspruch 1, **dadurch gekennzeichnet, dass** die Sollbruchstellen (7) aus in die Faserverbundlagen (6) der Innenwand (20) übereinander oder versetzt zueinander eingebrachten Schlitzen (9) besteht, wobei die Größe und Anzahl der Schlitze (9) pro Sollbruchstelle variabel ist und den Betrag der Materialschwächung bestimmt.

3. Fluggasturbine nach Anspruch 2, **dadurch gekennzeichnet, dass** Schlitze (9) - abgesehen von der der Triebwerksströmung ausgesetzten Lage- in allen Faserverbundlagen (26) ausgebildet sind.

4. Fluggasturbine nach Anspruch 1, **dadurch gekennzeichnet, dass** die Sollbruchstellen (7) durch in der Innenwand (20) vorgesehene Montagebohrungen (8) gebildet sind, wobei die Montagebohrungen (8) durch eine bündig an die Oberfläche der Innenwand (20) anschließende Abdeckplatte verschlossen sind.

5. Fluggasturbine nach Anspruch 4, **dadurch gekennzeichnet, dass** aus Schlitzen (9) und aus Montagebohrungen (8) gebildete Sollbruchstellen (7) miteinander kombiniert sind.

6. Fluggasturbine nach Anspruch 5, **dadurch gekennzeichnet, dass** jeweils zwei vom Rand des Segments beabstandete Montagebohrungen (8) mit dazwischen liegenden, aus Schlitzen (9) gebildeten Sollbruchstellen (7) kombiniert sind.

7. Fluggasturbine nach Anspruch 1, **dadurch gekennzeichnet, dass** diese einen Eisschlagschutzring (4) enthält, welcher aus sechs aneinander gereihten 60°-Segmenten (3) gebildet ist und die Sollbruchstellen (7) in einem 10°-Abstand ausgebildet sind.

8. Fluggasturbine nach Anspruch 1, **dadurch gekennzeichnet, dass** diese einen Eisschlagschutzring (4) enthält, dessen Außenwand (21) über einen Klebefilm (11) mit der Innenfläche des Fangehäuses (1) verbunden ist und zusätzlich durch eine Sicherheitsverschraubung (12) am Fangehäuse (1) fixiert ist, so dass die Außenwand (21) auch bei extremem Eisschlag unzerstört am Fangehäuse (1) haftet.

9. Fluggasturbine nach Anspruch 8, **dadurch gekennzeichnet, dass** die Sicherheitsverschraubung (12) eine am Fangehäuse (1) fixierte Sicherungsbuchse (14) mit einem zwischen der Innenwand (20) und der Außenwand (21) des Segments angeordneten breiten Kopf umfasst, wobei der breite Kopf über eine elastische Bettung (15) die Außenwand (21) des Segments (3) mittels einer Schraubverbindung (16 bis 19) am Fangehäuse verspannt.

## Claims

1. Aircraft gas turbine including a fan casing (1), a fan (2) and outlet guide vanes downstream of the fan (2), where the fan casing includes an ice strike sheathing ring (4), which comprises segments (3) consisting of several fiber compound layers (6) with an inner wall (20) exposed to the engine flow and possibly to ice strike and an outer wall (21) attached to the fan casing (1),
**characterized in that**
in the inner wall (20) predetermined breaking points (7, 8, 9) essentially extending in the flow direction are provided at a certain regular distance, and said distance is selected such that fragments of the inner wall (20) produced under extreme ice strike conditions can pass the outlet guide vanes.

2. Aircraft gas turbine in accordance with Claim 1, **characterized in that** the predetermined breaking points (7) consist of slots (9) provided in the fiber compound layers (6) of the inner wall (20) one above the other or offset relative to one another, with the size and number of the slots (9) per predetermined breaking point being variable and defining the amount of material weakening.

3. Aircraft gas turbine in accordance with Claim 2, **characterized in that** slots (9) are provided in all fiber compound layers (6), except the layer exposed to the engine flow.

4. Aircraft gas turbine in accordance with Claim 1, **characterized in that** the predetermined breaking points (7) are formed by assembly holes (8) provided in the inner wall (20), with the assembly holes (8) being closed by means of a blanking plate which is flush with the surface of the inner wall (20).

5. Aircraft gas turbine in accordance with Claim 4, **characterized in that** predetermined breaking points (7) formed by slots (9) and by assembly holes (8) are combined with one another.

6. Aircraft gas turbine in accordance with Claim 5, **characterized in that** two each assembly holes (8) arranged at a certain distance from the edge of the segment are combined with predetermined breaking points (7) formed by slots (9) and arranged between the assembly holes (8).

7. Aircraft gas turbine in accordance with Claim 1, **characterized in that** this turbine includes an ice strike sheathing ring (4), which is composed of a suite of six 60-degree segments (3) and that the predetermined breaking points (7) are provided with a 10-degree spacing.

8. Aircraft gas turbine in accordance with Claim 1, **characterized in that** this turbine includes an ice strike sheathing ring (4), the outer wall (21) of which is connected to the inner surface of the fan casing (1) by means of an adhesive film (11) and additionally fixed to the fan casing (1) by means of a threaded safety connection (12), so that the outer wall (21) remains firmly attached to the fan casing (1) without being destroyed even under extreme ice strike conditions.

9. Aircraft gas turbine in accordance with Claim 8, **characterized in that** the threaded safety connection (12) includes a locking bush (14) attached to the fan casing (1) with a wide head arranged between the inner wall (20) and the outer wall (21) of the segment, where the wide head in combination with an elastic embedment (15) restrains the outer wall (21) of the segment (3) at the fan casing by means of a threaded connection (16 to 19).

## Revendications

1. Turbine à gaz aéronautique, comprenant un carter de soufflante (1), une soufflante (2) et des aubes directrices de sortie disposées en aval de la soufflante (2), sachant que le carter de soufflante comprend un anneau de protection contre l'impact de glace (4), lequel comprend des segments (3) constitués de plusieurs couches renforcées par des fibres (6) avec une paroi intérieure (20) exposée à l'écoulement du moteur et à l'impact de glace le cas échéant, et une paroi extérieure (21) fixée au carter de soufflante (1),
**caractérisée en ce que**
dans la paroi intérieure (20) sont formés selon un intervalle défini, régulier, des points destinés à la rupture (7, 8, 9) s'étendant pour l'essentiel dans le sens d'écoulement, et que l'intervalle est choisi de manière telle que des fragments de la paroi intérieure (20) formés par un impact de glace extrême puissent passer les aubes directrices de sortie.

2. Turbine à gaz aéronautique selon la revendication n° 1, **caractérisée en ce que** les points destinés à la rupture (7) sont constitués par des fentes (9) superposées ou décalées les unes par rapport aux autres et pratiquées dans les couches renforcées par des fibres (6) de la paroi intérieure (20), sachant que la taille et le nombre de fentes (9) par point destiné à la rupture sont variables et déterminent l'importance de l'affaiblissement de matière.

3. Turbine à gaz aéronautique selon la revendication n° 2, **caractérisée en ce que** des fentes (9) sont formées dans toutes les couches renforcées par des fibres (6) - mise à part la couche qui est exposée à l'écoulement du moteur.

4. Turbine à gaz aéronautique selon la revendication n° 1, **caractérisée en ce que** les points destinés à la rupture (7) sont formés par des perçages de montage (8) prévus dans la paroi intérieure (20), les perçages de montage (8) étant obturés par une plaque de recouvrement affleurant la surface de la paroi intérieure (20).

5. Turbine à gaz aéronautique selon la revendication n° 4, **caractérisée en ce que** des points destinés à la rupture (7) constitués de fentes (9) et de perçages de montage (8) sont combinés entre eux.

6. Turbine à gaz aéronautique selon la revendication n° 5, **caractérisée en ce que** respectivement deux perçages de montage (8) distants du bord du segment sont combinés à des points destinés à la rupture (7) constitués de fentes (9) situés entre les perçages de montage (8).

7. Turbine à gaz aéronautique selon la revendication n° 1, **caractérisée en ce que** celle-ci comprend un anneau de protection contre l'impact de glace (4), lequel est constitué de six segments de 60° (3) alignés entre eux et que les points destinés à la rupture (7) sont formés selon un intervalle de 10°.

8. Turbine à gaz aéronautique selon la revendication n° 1, **caractérisée en ce que** celle-ci comprend un anneau de protection contre l'impact de glace (4), dont la paroi extérieure (21) est reliée à la surface intérieure du carter de soufflante (1) par un film adhésif (11) et de plus fixée par un vissage de sécurité (12) au carter de soufflante (1), de sorte que même en cas d'impact de glace extrême, la paroi extérieure (21) reste fixée au carter de soufflante (1) sans être détruite.

9. Turbine à gaz aéronautique selon la revendication n° 8, **caractérisée en ce que** le vissage de sécurité (12) comprend un coussinet d'arrêt (14) qui est fixé au carter de soufflante (1) et doté d'une large tête disposée entre la paroi intérieure (20) et la paroi extérieure (21) du segment, sachant que la large tête presse la paroi extérieure (21) du segment (3) sur le carter de soufflante par l'intermédiaire d'un encastrement élastique (15) au moyen d'un assemblage par vis (16 à 19).
